# FASCICULE DE BREVET EUROPEEN

(11) **EP 4 273 720 B1**
(45) Date de publication et mention de la délivrance du brevet: **16.07.2025**
(21) Numéro de dépôt: 23169405.0
(22) Date de dépôt: 24.04.2023
(51) Int. Cl.: G06F 21/10, G06F 21/70, G06F 21/78, G06F 21/82, G06F 21/83, G06F 21/85, H04L 9/40, H04W 12/08

(54) **SYSTÈME SUR PUCE INTÉGRANT UN CIRCUIT D´ACCÈS DIRECT EN MÉMOIRE ET PROCÉDÉ CORRESPONDANT**
SYSTEM ON CHIP INTEGRIERT EINE DIREKTE SPEICHERZUGRIFFSCHALTUNG UND ENTSPRECHENDES VERFAHREN
SYSTEM-ON-CHIP INCORPORATING A DIRECT MEMORY ACCESS CIRCUIT AND CORRESPONDING METHOD

(30) Priorité: 05.05.2022 FR 2204276
(43) Date de publication de la demande: 08.11.2023
(73) Titulaire: STMicroelectronics (Rousset) SAS, 13790 Rousset (FR)
(72) Inventeur: WALLIS, Mark, 06370 Mouans-Sartoux (FR); LESTRINGAND, Laurent, 06160 Antibes (FR)
(74) Mandataire: Casalonga

(56) Documents cités:
- US-A1- 2019 317 904
- US-A1- 2021 049 286
- US-A1- 2021 264 065

## Description

Des modes de réalisation et de mise en œuvre concernent les systèmes sur puce, notamment un contrôleur d'accès direct en mémoire intégré à des systèmes sur puce.

Les microcontrôleurs et les processeurs au sein d'un système sur puce possèdent généralement des fonctions pouvant être utilisées par certaines applications lorsque celles-ci sont exécutées par le processeur. Certaines de ces fonctions nécessitent d'être protégées contre des actions non-autorisées, comme par exemple une intrusion non-autorisée dans la mémoire du système permettant d'avoir accès à des données sensibles, ou un blocage des fonctions critiques du système.

Pour éviter ces actions non-autorisées, ces fonctions sont réparties dans des contextes de niveau de droit d'accès sécurisés et non-sécurisés distincts. Les fonctions dans le contexte sécurisé sont seulement accessibles par un programme sécurisé du système sur puce, ce qui est uniquement possible quand le processeur du système est dans un état sécurisé.

Il convient de définir les contextes sécurisés et non-sécurisés de façon que le contexte du système sur puce puisse s'adapter à l'application à exécuter. En effet, certains périphériques mettent en œuvre des fonctions sécurisées et le système doit être dans le contexte sécurisé pour les utiliser, tandis que d'autres périphériques mettent en œuvre des fonctions non-sécurisées et le système doit être dans le contexte non-sécurisé pour les utiliser. Il existe également des périphériques dont le niveau de droit d'accès, sécurisé ou non-sécurisé, peut changer selon leurs utilisations.

Les périphériques de niveau de droit d'accès « sécurisé » sont seulement accessibles par le programme sécurisé, tandis que les périphériques de niveau de droit d'accès « non-sécurisé » peuvent être accessibles par le programme sécurisé ou également par un programme non-sécurisé du système lors de leurs exécutions par le processeur.

Le document US 2021/264065 divulgue des SoCs ayant des mémoires qui peuvent être divisées en régions "sécurisées" ou "non sécurisées" et certains périphériques qui peuvent avoir des contrôleurs de DMA intégrés. Le document US 2019/317904 divulgue des mémoires ayant des régions "sécurisées" ou "non sécurisées", où chaque sous-système I/O possède également son propre bloc/moteur DMA. Le document US 2021/049286 divulgue des mémoires qui peuvent être divisées en zones de stockage "sécurisées" ou "non sécurisées" et un contrôleur qui est configuré pour définir un attribut de sécurité d'un périphérique.

Typiquement, certains périphériques peuvent être accessibles par un contrôleur d'accès direct en mémoire (plus connu sous l'acronyme « DMA » des termes anglais usuels « Direct Memory Access ») qui est un dispositif maître d'un bus de communication du système, sur lequel peuvent être reliés les processeurs, les périphériques et les mémoires. À la réception d'une requête de transfert d'accès direct en mémoire provenant d'un périphérique, le contrôleur d'accès direct en mémoire effectue un ou plusieurs accès aux registres de ce périphérique. Lorsque le périphérique dispose d'un niveau de droit d'accès « sécurisé », le contrôleur d'accès direct en mémoire doit avoir le niveau de droit d'accès « sécurisé », de la même façon que le processeur.

Le contrôleur d'accès direct en mémoire est donc souvent utilisé dans les systèmes sur puce pour réaliser des transferts de données entre un périphérique et une région mémoire indépendamment du processeur afin d'éviter des interruptions pouvant ralentir le fonctionnement du processeur.

En effet, un contrôleur d'accès direct en mémoire peut être requis par des applications sécurisées pour transférer des données entre des périphériques sécurisés et une région mémoire sécurisée, et aussi par des applications non-sécurisées pour transférer des données entre des périphériques non sécurisés et une région mémoire non-sécurisée.

Pour empêcher une perte ou un vol des données sensibles, il convient de ne pas permettre aux applications non-sécurisées de configurer le contrôleur d'accès direct en mémoire dans un état sécurisé, qui leur permettrait d'accéder aux régions mémoires sécurisées et aux périphériques sécurisés. Par ailleurs, les requêtes d'accès direct en mémoire provenant des périphériques de niveau de droit d'accès sécurisé ne doivent typiquement pas être acheminées vers un contrôleur d'accès direct en mémoire dans en état non sécurisé.

Etant donné que plusieurs périphériques peuvent être programmés de façon à avoir un niveau de droit d'accès sécurisé ou non-sécurisé, l'état du contrôleur d'accès direct en mémoire est généralement défini par le niveau de droit d'accès sécurisé ou non-sécurisé de la requête générée par chaque périphérique et étant adressée au contrôleur. Le niveau de droit d'accès de la requête est typiquement défini par le niveau de droit d'accès sécurisé ou non-sécurisé du périphérique à l'origine de la requête.

A cet effet, les contrôleurs d'accès direct en mémoire classiques disposent de plusieurs canaux permettant d'acheminer les requêtes des périphériques vers le contrôleur, et le niveau de droits d'accès du contrôleur d'accès direct en mémoire est typiquement programmable pour chaque canal. Classiquement, le programme sécurisé est prévu pour configurer le niveau de droit d'accès de chaque canal du contrôleur d'accès direct en mémoire, selon le niveau de droit d'accès de la requête reçue par le contrôleur.

En outre, les canaux des contrôleurs classiques sont typiquement peu nombreux par rapport au nombre de périphériques du système. En conséquence, le programme sécurisé doit attribuer dynamiquement des canaux aux différents périphériques et définir leurs niveaux de droit d'accès en fonction des périphériques qui sont actifs et de leurs niveaux de droit d'accès respectifs. De plus, la réattribution régulière des canaux à des périphériques génère systématiquement des interruptions et des mises en œuvre du programme sécurisé, ce qui détériore les performances globales du système.

Par conséquent, les contrôleurs d'accès direct en mémoire classiques sont complexes sur le plan de leurs conceptions et de leurs utilisations.

Ainsi, il existe un besoin de proposer des solutions ne subissant pas les inconvénients susmentionnés.

Des modes de mise en œuvre et de réalisation proposent un contrôleur d'accès direct en mémoire simple et capable de gérer les accès directs en mémoire de façon autonome sans configuration du contrôleur par le logiciel sécurisé du système sur puce.

Selon un aspect, il est proposé un système sur puce comportant un circuit de mémoire comprenant une première région mémoire accessible avec un premier niveau de droit d'accès et une deuxième région mémoire accessible avec le premier niveau de droit d'accès ou un deuxième niveau de droit d'accès, au moins un premier périphérique ayant le premier niveau de droit d'accès, au moins un deuxième périphérique ayant le deuxième niveau de droit d'accès, et un circuit d'accès direct en mémoire apte à générer des accès directs en mémoire.

Le circuit d'accès direct en mémoire comporte au moins un premier contrôleur d'accès direct en mémoire ayant le premier niveau de droit d'accès et au moins un deuxième contrôleur d'accès direct en mémoire ayant le deuxième niveau de droit d'accès.

Le système sur puce comporte un circuit de routage configuré pour coupler matériellement ledit au moins un premier périphérique avec ledit au moins un premier contrôleur et pour coupler matériellement ledit au moins un deuxième périphérique avec ledit au moins un deuxième contrôleur.

En d'autres termes, cet aspect permet d'utiliser un circuit d'accès direct en mémoire simple et supporte le partitionnement de sécurité par canal à la place d'un contrôleur classique nécessitant une programmation des droits d'accès pour chaque utilisation des canaux, complexe de conception et d'utilisation. En effet, il n'est pas nécessaire de relier, par l'intermédiaire du programme sécurisé, l'état de sécurité des périphériques au contrôleur d'accès direct en mémoire, puisque cela est fait matériellement par le circuit de routage. Ainsi, il n'est pas nécessaire de programmer l'état de sécurité du contrôleur d'accès direct en mémoire en plus de l'état de sécurité des périphériques. En outre, les fonctions non-sécurisées n'ont pas besoin de demander un service sécurisé au programme sécurisé pour allouer des canaux d'entrée au contrôleur d'accès direct en mémoire.

Ainsi, il n'est pas nécessaire de reconfigurer chaque contrôleur pour générer un nouvel accès direct en mémoire à un périphérique selon le niveau de droit d'accès du périphérique, ce qui permet de concevoir un circuit d'accès direct en mémoire plus simple et plus fiable.

En particulier, l'état de chaque contrôleur n'est pas reprogrammé par le programme sécurisé du système selon le niveau de droit d'accès de chaque périphérique, ce qui permet par exemple d'éviter une programmation erronée de l'état du contrôleur lors d'un accès direct en mémoire d'une région mémoire par un périphérique non-autorisé.

Selon un mode de réalisation, le système sur puce comprend en outre au moins un troisième périphérique apte à avoir un niveau de droit d'accès dynamiquement attribué entre le premier niveau de droit d'accès et le deuxième niveau de droit d'accès, et un moyen de gestion de niveau de droit d'accès configuré pour attribuer le niveau de droit d'accès audit au moins un troisième périphérique, dans lequel ledit circuit de routage comprend des moyens de commutation configurés pour coupler matériellement ledit au moins un troisième périphérique avec ledit au moins un premier contrôleur lorsque le premier niveau de droit d'accès est attribué au troisième périphérique, et pour coupler matériellement ledit au moins un troisième périphérique avec ledit au moins un deuxième contrôleur lorsque le deuxième niveau de droit d'accès est attribué au troisième périphérique.

Le circuit de routage permet ainsi de rediriger matériellement et automatiquement la requête générée par un périphérique selon son niveau de droit d'accès, soit vers le premier contrôleur, soit vers le deuxième contrôleur.

Selon un mode de réalisation, lesdits périphériques sont configurés pour générer des requêtes ayant le niveau de droit d'accès identique au niveau de droit d'accès du périphérique respectif, ledit au moins un premier contrôleur d'accès direct en mémoire est configuré pour générer un accès direct en mémoire, en réponse à une requête ayant le premier niveau de droit d'accès, comprenant un transfert d'une salve de données entre le périphérique qui a généré la requête et la première région mémoire ou la deuxième région mémoire, et ledit au moins un deuxième contrôleur d'accès direct en mémoire est configuré pour générer un accès direct en mémoire, en réponse à une requête ayant le deuxième niveau de droit d'accès, comprenant un transfert d'une salve de données entre le périphérique qui a généré la requête et la deuxième région mémoire.

Chaque contrôleur d'accès direct en mémoire peut donc effectuer un transfert de données correspondant à une technique classique d'accès direct en mémoire entre les régions mémoires et les périphériques, de manière connue et maîtrisée tout en bénéficiant d'un comportement plus fiable.

Selon un mode de réalisation, le circuit de routage est adapté pour coupler dynamiquement un nombre N desdits périphériques ayant le premier niveau de droit d'accès audit au moins un premier contrôleur d'accès direct en mémoire et pour coupler dynamiquement un nombre M desdits périphériques ayant le deuxième niveau de droit d'accès audit au moins un deuxième contrôleur d'accès direct en mémoire.

Le nombre N et M de périphériques correspond au nombre limite de canaux que peut attribuer le circuit de routage aux périphériques respectivement au premier contrôleur et au deuxième contrôleur. Par exemple chaque contrôleur comporte 8 ou 16 canaux. Un canal représente une liaison physique établie entre un périphérique et un contrôleur permettant un acheminement des requêtes provenant du périphérique vers le contrôleur. Ainsi, le couplage dynamique du circuit de routage permet que chaque contrôleur puisse être couplé à un plus grand nombre de périphériques que le nombre de canaux d'entrées, tout en bénéficiant là-encore de la simplicité d'utilisation selon l'aspect défini ci-avant, c'est-à-dire l'absence du besoin de reprogrammer les droits d'accès des canaux du contrôleur par le programme sécurisé.

Selon un mode de réalisation, le premier niveau de droit d'accès est un niveau de droit d'accès sécurisé correspondant à des fonctions sécurisées et le deuxième niveau de droit d'accès est un niveau de droit d'accès non-sécurisé correspondant à des fonctions non-sécurisées, le système sur puce comportant des moyens matériels de séparation physique entre les éléments ayant le niveau de droit d'accès sécurisé et les éléments ayant le niveau de droit d'accès non-sécurisé.

Selon un mode de réalisation, le système sur puce comprend en outre un processeur capable de définir le niveau de droit d'accès dudit au moins un troisième périphérique, et un bus configuré pour acheminer des signaux de communication entre le processeur, lesdits périphériques et le circuit de mémoire.

Selon un autre aspect, il est proposé un procédé d'accès direct en mémoire à une première région mémoire accessible avec un premier niveau de droit d'accès et à une deuxième région mémoire accessible avec le premier niveau de droit d'accès ou un deuxième niveau de droit d'accès, par au moins un premier périphérique ayant le premier niveau de droit d'accès et par au moins un deuxième périphérique ayant le deuxième niveau de droit d'accès, lesdits accès direct en mémoire par ledit au moins un premier périphérique étant générés par au moins un premier contrôleur d'accès direct en mémoire ayant le premier niveau de droit d'accès d'un circuit d'accès direct en mémoire, et lesdits accès direct en mémoire par ledit au moins un deuxième périphérique étant générés par au moins un deuxième contrôleur d'accès direct en mémoire ayant le deuxième niveau de droit d'accès.

Selon un mode de mise en œuvre, le procédé comprend un accès direct en mémoire à la première région mémoire et à la deuxième région mémoire par au moins un troisième périphérique apte à avoir un niveau de droit d'accès dynamiquement attribué entre le premier niveau de droit d'accès et le deuxième niveau de droit d'accès, l'accès direct en mémoire par ledit au moins un troisième périphérique étant généré par ledit au moins un premier contrôleur d'accès direct lorsque le premier niveau de droit d'accès est attribué au troisième périphérique et par ledit au moins un deuxième contrôleur d'accès direct en mémoire lorsque le deuxième niveau de droit d'accès est attribué au troisième périphérique.

Selon un mode de mise en œuvre, des requêtes sont générées par les périphériques, les requêtes ayant le niveau de droit d'accès identique au niveau de droit d'accès du périphérique respectif, et les accès directs en mémoire générés par ledit au moins un premier contrôleur, en réponse à une requête ayant le premier niveau de droit d'accès, comprennent un transfert d'une salve de données entre le périphérique qui a généré la requête et la première région mémoire ou la deuxième région mémoire, et, les accès directs en mémoire générés par ledit au moins un deuxième contrôleur, en réponse à une requête ayant le deuxième niveau de droit d'accès, comprennent un transfert d'une salve de données entre le périphérique qui a généré la requête et la deuxième région mémoire.

Selon un mode de mise en œuvre, le premier niveau de droit d'accès est un niveau de droit d'accès sécurisé correspondant à des fonctions sécurisées et le deuxième niveau de droit d'accès est un niveau de droit d'accès non-sécurisé correspondant à des fonctions non-sécurisées, les éléments ayant le niveau de droit d'accès sécurisé et les éléments ayant le niveau de droit d'accès non-sécurisé étant séparés physiquement par des moyens matériels de séparation physique.

Selon un mode de mise en œuvre, le procédé comprend un couplage dynamique d'un nombre N desdits périphériques ayant le premier niveau de droit d'accès audit au moins un premier contrôleur d'accès direct en mémoire et un couplage dynamique d'un nombre M desdits périphériques ayant le deuxième niveau de droit d'accès audit au moins un deuxième contrôleur d'accès direct en mémoire.

Selon un mode de mise en œuvre, le premier niveau de droit d'accès est un niveau de droit d'accès sécurisé correspondant à des fonctions sécurisées et le deuxième niveau de droit d'accès est un niveau de droit d'accès non-sécurisé correspondant à des fonctions non-sécurisées, les éléments ayant le niveau de droit d'accès sécurisé et les éléments ayant le niveau de droit d'accès non-sécurisé étant séparés physiquement par des moyens matériels de séparation physique.

Selon un mode de mise en œuvre, le procédé comprend un acheminement de signaux de communication par un bus entre lesdits périphériques, le circuit de mémoire et un processeur capable de définir le niveau de droit d'accès dudit au moins un troisième périphérique.

D'autres avantages et caractéristiques de l'invention apparaîtront à l'examen de la description détaillée de modes de réalisation et de mise en œuvre, nullement limitatifs, et des dessins annexés, sur lesquels :
[Fig 1]

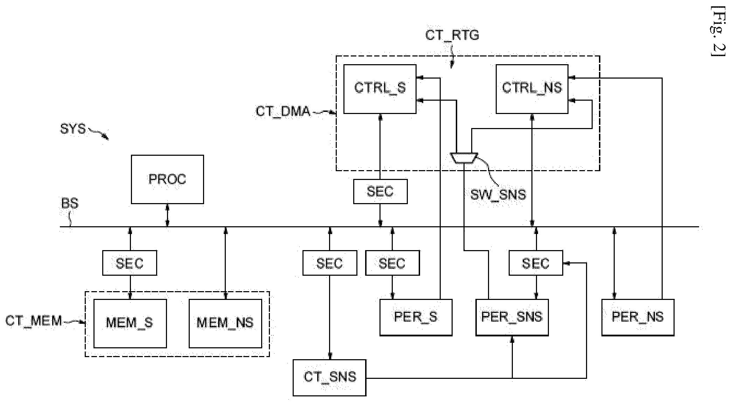

[Fig 2] illustrent schématiquement des modes de réalisation et de mise en œuvre de l'invention.

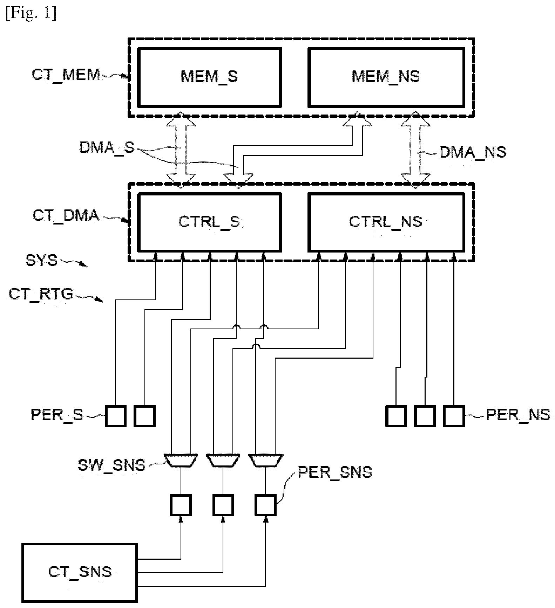

La figure 1 illustre un système sur puce SYS. Le système SYS comporte un circuit de mémoire CT_MEM, au moins un premier périphérique PER_S et au moins un deuxième périphérique PER_NS.

Le circuit de mémoire CT_MEM comprend une première région mémoire MEM_S accessible avec un premier niveau de droit d'accès et une deuxième région mémoire MEM_NS accessible avec le premier niveau de droit d'accès ou un deuxième niveau de droit d'accès. Le circuit de mémoire CT_MEM peut être une mémoire SRAM ou DRAM par exemple qui comporte plusieurs régions mémoires définies à des adresses mémoires différentes. En alternative, le circuit de mémoire CT_MEM peut également être conçu à partir d'au moins deux mémoires distinctes dont une mémoire MEM_S accessible avec le premier niveau de droit d'accès et une mémoire MEM_NS accessible avec le deuxième niveau de droit d'accès.

En particulier, le premier niveau de droit d'accès peut être un niveau de droit d'accès « sécurisé » et le deuxième niveau de droit d'accès peut être un niveau de droit d'accès « non-sécurisé ». Le niveau de droit d'accès « sécurisé » correspond à des fonctions sécurisées qui peuvent être mises en œuvre par les premiers périphériques PER_S et la première région mémoire MEM_S par exemple. Le niveau de droit d'accès « non-sécurisé » correspond à des fonctions non-sécurisées qui peuvent être mises en œuvre par les deuxièmes périphériques PER_NS et la deuxième région mémoire MEM_NS par exemple. Le système sur puce SYS comporte des moyens matériels de séparation physique SEC entre les éléments ayant le niveau de droit d'accès sécurisé, tels que les premiers périphériques PER_S et la première région mémoire MEM_S, et les éléments ayant le niveau de droit d'accès non-sécurisé, tels que les deuxièmes périphériques PER_NS et la deuxième région mémoire MEM_NS. Par exemple, les moyens matériels de séparation physique comprennent des interfaces de sécurité SEC qui seront décrites par la suite en relation avec la figure 2.

Le système SYS tel que représenté sur la figure 1 comporte plusieurs premiers périphériques PER_S, par exemple deux, et plusieurs deuxièmes périphériques PER_NS, par exemple trois. Les premiers périphériques PER_S ont le premier niveau de droit d'accès et les deuxièmes périphériques PER_NS ont le deuxième niveau de droit d'accès.

Le système SYS comporte également au moins un troisième périphérique PER_SNS, par exemple trois. Les troisièmes périphériques PER_SNS sont aptes à avoir un niveau de droit d'accès dynamiquement attribué entre le premier niveau de droit d'accès et le deuxième niveau de droit d'accès.

Les premiers périphériques PER_S sont configurés pour générer une requête ayant le premier niveau de droit d'accès et les deuxièmes périphériques PER_NS sont configurés pour générer une requête ayant le deuxième niveau de droit d'accès. Les troisièmes périphériques PER_SNS sont configurés pour générer une requête ayant le premier niveau de droit d'accès ou une requête ayant le deuxième niveau de droit d'accès selon le niveau de droit d'accès qui leur est attribué. La requête peut être une requête d'accès direct en mémoire pour transférer des données entre un périphérique et une région mémoire.

Le système sur puce SYS comprend en outre un moyen de gestion de niveau de droit d'accès CT_SNS. Le moyen de gestion de niveau de droit d'accès CT_SNS est configuré pour attribuer les niveaux de droit d'accès respectifs des troisièmes périphériques PER_SNS.

Par exemple, le moyen de gestion de niveau de droit d'accès CT_SNS peut attribuer le premier niveau de droit d'accès ou le deuxième niveau de droit d'accès à chacun des troisièmes périphériques PER_SNS. Le ou les troisièmes périphériques PER_SNS ayant le premier niveau de droit d'accès sont configurés pour générer une requête ayant le premier niveau de droit d'accès et le ou les troisièmes périphériques ayant le deuxième niveau de droit d'accès sont configurés pour générer une requête ayant le deuxième niveau de droit d'accès.

Le moyen de gestion de niveau de droit d'accès CT_SNS peut être par exemple mis en œuvre de façon logicielle par un programme sécurisé du système SYS (voir la description ci-après en relation avec la figure 2).

Par ailleurs, le système SYS comporte un circuit d'accès direct en mémoire CT_DMA apte à générer des accès directs en mémoire DMA_S et DMA_NS et un circuit de routage CT_RTG apte à acheminer les requêtes générées par les périphériques PER_S, PER_NS, PER_SNS vers le circuit d'accès direct en mémoire CT_DMA.

Le circuit d'accès direct en mémoire CT_DMA comporte au moins un premier contrôleur d'accès direct en mémoire CTRL_S et au moins un deuxième contrôleur d'accès direct en mémoire CTRL_NS. Le premier contrôleur d'accès direct en mémoire CTRL_S a le premier niveau de droit d'accès qui peut être le niveau de droit d'accès « sécurisé », et le deuxième contrôleur d'accès direct en mémoire CTRL_NS a le deuxième niveau de droit d'accès qui peut être le niveau de droit d'accès « non-sécurisé ».

Le circuit de routage CT_RTG est configuré pour coupler matériellement ledit au moins un premier périphérique PER_S avec ledit au moins un premier contrôleur CTRL_S et pour coupler matériellement ledit au moins un deuxième périphérique PER_NS avec ledit au moins un deuxième contrôleur CTRL_NS.

Les premiers périphériques PER_S sont couplés matériellement par le circuit de routage CT_RTG avec le premier contrôleur d'accès direct en mémoire CTRL_S et les deuxièmes périphériques PER_NS sont couplés matériellement par le circuit de routage CT_RTG avec le deuxième contrôleur d'accès direct en mémoire CTRL_NS. Le circuit de routage CT_RTG peut être un circuit comportant des fils électriques soudées entre les premiers périphériques PER_S et le premier contrôleur d'accès direct en mémoire CTRL_S et d'autres fils électriques soudées entre les deuxièmes périphériques PER_NS et le deuxième contrôleur d'accès direct en mémoire CTRL_NS. Les fils du circuit de routage CT_RTG permettent notamment une communication entre les périphériques et les contrôleurs auquel ils sont couplés, comme par exemple une transmission d'une requête entre un périphérique et un contrôleur.

Le circuit de routage CT_RTG comprend des moyens de commutation SW_SNS, tels que des circuits de commutation classiques munis de transistors par exemple.

Les moyens de commutation SW_SNS sont configurés pour coupler matériellement ledit au moins un premier contrôleur CTRL_S avec les troisièmes périphériques PER_SNS ayant le premier niveau de droit d'accès, et pour coupler matériellement ledit au moins un deuxième contrôleur CTRL_NS avec les troisièmes périphériques PER_SNS ayant le deuxième niveau de droit d'accès.

Pour réaliser ce couplage des troisièmes périphériques PER_SNS avec le premier contrôleur CTRL_S et avec le deuxième contrôleur CTRL_NS, chaque moyen de commutation SW_SNS peut comprendre une entrée reliée à un troisième périphérique PER_SNS respectif et deux sorties reliées respectivement au premier contrôleur CTRL_S et au deuxième contrôleur CTRL_NS par des fils électriques du circuit de routage CT_RTG. Les moyens de commutation SW_SNS sont configurés pour basculer sur l'une ou l'autre de leurs sorties pour transmettre la requête au contrôleur d'accès direct en mémoire correspondant CTRL_S, CTRL_NS, selon le niveau de droit d'accès de la requête reçue sur leurs entrées. Le nombre de sorties des moyens de commutation SW_SNS peut évidemment être adapté au nombre de premiers contrôleurs CTRL_S et au nombre de deuxièmes contrôleurs CTRL_NS. Comme décrit précédemment, les fils du circuit de routage CT_RTG permettent notamment une communication entre les périphériques et les contrôleurs auxquels ils sont couplés, en particulier une transmission d'une requête entre un périphérique et un contrôleur par exemple.

Le circuit de routage CT_RTG permet ainsi de rediriger la requête générée par le périphérique PER_SNS selon son niveau de droit d'accès soit vers le premier contrôleur CTRL_S ou soit vers le deuxième contrôleur CTRL_NS.

Ledit au moins un premier contrôleur d'accès direct en mémoire CTRL_S et ledit au moins un deuxième contrôleur d'accès direct en mémoire CTRL_NS comprennent des canaux par lesquels ils peuvent recevoir les requêtes des périphériques. Un canal représente une liaison physique établie entre un périphérique et un contrôleur permettant un acheminement des requêtes provenant du périphérique vers le contrôleur.

Etant donné que les périphériques PER_S, PER_NS, PER_SNS ne sont pas tous couplés au même contrôleur, les canaux sont répartis entre le premier contrôleur CTRL_S et le deuxième contrôleur CTRL_NS permettant ainsi un partitionnement de sécurité par canal. Le partitionnement de sécurité par canal correspond à un acheminement des requêtes ayant le premier niveau de droit d'accès par les canaux du premier contrôleur CTRL_S, ayant lui aussi le premier niveau de droit d'accès, et à un acheminement des requêtes ayant le deuxième niveau de droit d'accès par les canaux du deuxième contrôleur CTRL_NS, ayant lui aussi le deuxième niveau de droit d'accès.

Le premier contrôleur CTRL_S peut comporter par exemple 8 ou 16 canaux utilisés par les premiers périphériques PER_S et les troisièmes périphériques PER_SNS, et le deuxième contrôleur CTRL_NS peut comporter par exemple 8 ou 16 canaux utilisés par les deuxièmes périphériques PER_NS et les troisièmes périphériques PER_SNS.

Les requêtes d'accès direct en mémoire générées par les périphériques PER_S, PER_SNS et PER_NS font parties du processus permettant au circuit d'accès direct en mémoire CT_DMA de générer les différents accès directs en mémoire.

Le premier contrôleur d'accès direct en mémoire CTRL_S est configuré pour générer un accès direct en mémoire DMA_S en réponse à une requête ayant le premier niveau de droit d'accès. L'accès direct en mémoire DMA_S comprend un transfert d'une salve de données entre le premier périphérique PER_S ou le troisième périphérique PER_SNS qui a généré la requête et la première région mémoire MEM_S ou la deuxième région mémoire MEM_NS.

Le deuxième contrôleur d'accès direct en mémoire CTRL_NS est configuré pour générer un accès direct en mémoire DMA_NS en réponse à une requête ayant le deuxième niveau de droit d'accès. L'accès direct en mémoire DMA_NS comprend un transfert d'une salve de données entre le deuxième périphérique PER_NS ou le troisième périphérique PER_SNS qui a généré la requête et la deuxième région mémoire MEM_NS.

Chaque contrôleur d'accès direct en mémoire peut donc effectuer un transfert de données DMA_S ou DMA_NS correspondant à une technique classique d'accès direct en mémoire entre les régions mémoires MEM_S et MEM_NS et les périphériques PER_S, PER_SNS et PER_S, de manière connue et maîtrisée tout en bénéficiant d'un comportement plus fiable.

Les contrôleurs d'accès direct en mémoire CTR_S et CTRL_NS comporte typiquement un nombre limite de canaux permettant de communiquer avec les périphériques et de recevoir une requête d'accès direct en mémoire. Pour être en mesure de générer un accès direct en mémoire pour tous les périphériques couplés à un contrôleur d'accès direct en mémoire, le circuit de routage CT_RTG peut être adapté pour coupler dynamiquement des périphériques aux contrôleurs.

Avantageusement, le circuit de routage CT_RTG est adapté pour coupler dynamiquement un nombre N de périphériques PER_S et PER_SNS ayant le premier niveau de droit d'accès audit au moins un premier contrôleur d'accès direct en mémoire CTRL_S et pour coupler dynamiquement un nombre M de périphériques PER_NS et PER_SNS ayant le deuxième niveau de droit d'accès audit au moins un deuxième contrôleur d'accès direct en mémoire CTRL_NS.

Le nombre N et M de périphériques correspond au nombre limite de canaux que peut attribuer le circuit de routage CT_RTG aux périphériques respectivement au premier contrôleur CTRL_S et au deuxième contrôleur CTRL_NS. Par exemple chaque contrôleur comporte 8 ou 16 canaux. Ainsi, le couplage dynamique du circuit de routage CT_RTG permet que chaque contrôleur CTRL_S et CTRL_NS peut être couplé à un plus grand nombre de périphériques que le nombre de canaux d'entrées, tout en bénéficiant de la simplicité d'utilisation du contrôleur, c'est-à-dire l'absence du besoin de reprogrammer les droits d'accès des canaux du contrôleur par le programme sécurisé.

On se réfère désormais à la figure 2.

La figure 2 illustre le système sur puce SYS décrit précédemment en relation avec la figure 1, qui comprend en outre un processeur PROC et un bus BS.

Le processeur PROC est capable de définir le niveau de droit d'accès dudit au moins un troisième périphérique PER_SNS, par l'intermédiaire du moyen de gestion de niveau de droit d'accès CT_SNS lors de l'exécution du logiciel sécurisé par exemple. Par exemple, le moyen de gestion de niveau de droit d'accès CT_SNS peut être mis en œuvre de façon logicielle par le programme sécurisé du processeur PROC qui est seul capable de gérer individuellement le niveau de droit d'accès d'un périphérique PER_SNS, en modifiant par exemple la valeur d'un bit dédié correspondant au niveau de droit d'accès du périphérique PER_SNS.

Le processeur PROC, les contrôleurs CTRL_S et CTRL_NS, le circuit de mémoire CT_MEM ainsi que les périphériques PER_S, PER_SNS et PER_NS sont couplés au bus BS. L'interface de sécurité SEC appartenant aux moyens matériels de séparation physique peut être prévue entre le bus BS et les éléments sécurisés du système SYS, comme par exemple la région mémoire MEM_S, le moyen de gestion de niveau de droit d'accès CT_SNS, le premier contrôleur CTRL_S, les premiers périphériques PER_S et les troisièmes périphériques PER_SNS. L'interface de sécurité SEC permet par exemple d'autoriser ou d'empêcher un accès à un élément sécurisé du système selon le niveau de droit d'accès.

Le bus BS est configuré pour acheminer des signaux de communication, par exemple des signaux numériques, entre le processeur PROC, les périphériques PER_S, PER_SNS et PER_NS, et le circuit de mémoire CT_MEM.

Le transfert de données DMA_S ou DMA_NS peut donc se faire par l'intermédiaire du circuit d'accès direct en mémoire CT_DMA entre un périphérique et une région mémoire dans les deux sens à travers le bus BS.

Contrairement à des systèmes sur puce classiques dans lesquels le niveau de droit d'accès du canal du contrôleur doit être configuré par le programme sécurisé du processeur PROC, le système SYS décrit en relation avec les figures 1 et 2 comprend des contrôleurs CTRL_S, CTRL_NS ayant des canaux dont le niveau de droit d'accès est déjà défini par le niveau de droit d'accès du contrôleur.

On rappelle que le premier contrôleur d'accès direct en mémoire CTRL_S a le premier niveau de droit d'accès qui peut être le niveau de droit d'accès « sécurisé », et le deuxième contrôleur d'accès direct en mémoire CTRL_NS a le deuxième niveau de droit d'accès qui peut être le niveau de droit d'accès « non-sécurisé ».

Grâce au système SYS, les premiers contrôleur CTRL_S et les deuxièmes contrôleurs CTRL_NS ne nécessitent plus des actions du programme sécurisé pour permettre aux périphériques PER_S mettant en œuvre des fonctions d'un contexte sécurisé d'accéder aux régions mémoires sécurisée MEM_S et non-sécurisée MEM_NS et aux périphériques PER_NS mettant en œuvre des fonctions d'un contexte non-sécurisé d'accéder à la région mémoire non-sécurisée MEM_NS.

De plus, aucune action du programme sécurisé n'est également requise pour reconfigurer le niveau de droit d'accès des canaux du contrôleur lors de la réception de requête provenant de périphériques ayant un niveau de droit d'accès configurable. Par conséquent, le système SYS est parfaitement adapté à l'utilisation de troisièmes périphériques PER_SNS ayant des niveaux de droit d'accès configurables, qui sont capables de mettre en œuvre des fonctions sécurisées et des fonctions non-sécurisées.

Ainsi, chaque contrôleur d'accès direct en mémoire tel que décrit précédemment est simple et supporte le partitionnement de sécurité par canal. En effet, le circuit de routage CT_RTG est configuré pour relier l'état de sécurité des périphériques PER_S, PER_SNS et PER_NS au contrôleur d'accès direct en mémoire correspondant. En d'autres termes, l'état de sécurité du contrôleur d'accès direct en mémoire n'a pas besoin d'être programmé vis-à-vis de l'état de sécurité des périphériques PER_S, PER_SNS et PER_NS. Par conséquent, les fonctions non-sécurisées n'ont pas besoin de demander un service sécurisé au programme sécurisé pour allouer des canaux d'entrée au contrôleur d'accès direct en mémoire.

Ainsi, il n'est pas nécessaire de reconfigurer chaque contrôleur pour générer un nouvel accès direct en mémoire DMA_S ou DMA_NS à un périphérique PER_S, PER_SNS ou PER_NS selon le niveau de droit d'accès du périphérique, ce qui permet de concevoir un contrôleur plus simple.

En particulier, l'état de chaque contrôleur n'est pas reprogrammé par le programme sécurisé du système selon le niveau de droit d'accès de chaque périphérique PER_S, PER_SNS ou PER_NS, ce qui permet par exemple d'éviter une programmation erronée de l'état du contrôleur lors d'un accès direct en mémoire DMA_S ou DMA_NS d'une région mémoire par un périphérique non-autorisé.

## Revendications

1. Système sur puce (SYS) comportant un circuit de mémoire (CT_MEM) comprenant une première région mémoire (MEM_S) accessible avec un premier niveau de droit d'accès et une deuxième région mémoire (MEM_NS) accessible avec le premier niveau de droit d'accès ou un deuxième niveau de droit d'accès, au moins un premier périphérique (PER_S) ayant le premier niveau de droit d'accès, au moins un deuxième périphérique (PER_NS) ayant le deuxième niveau de droit d'accès, et un circuit d'accès direct en mémoire (CT_DMA) apte à générer des accès directs en mémoire (DMA_S, DMA_NS), dans lequel le circuit d'accès direct en mémoire (CT_DMA) comporte au moins un premier contrôleur d'accès direct en mémoire (CTRL_S) ayant le premier niveau de droit d'accès et au moins un deuxième contrôleur d'accès direct en mémoire (CTRL_NS) ayant le deuxième niveau de droit d'accès, le système sur puce (SYS) comportant un circuit de routage (CT_RTG) configuré pour coupler matériellement ledit au moins un premier périphérique (PER_S) avec ledit au moins un premier contrôleur (CTRL_S) et pour coupler matériellement ledit au moins un deuxième périphérique (PER_NS) avec ledit au moins un deuxième contrôleur (CTRL_NS),
comprenant en outre au moins un troisième périphérique (PER_SNS) apte à avoir un niveau de droit d'accès dynamiquement attribué entre le premier niveau de droit d'accès et le deuxième niveau de droit d'accès, et un moyen de gestion de niveau de droit d'accès (CT_SNS) configuré pour attribuer le niveau de droit d'accès audit au moins un troisième périphérique (PER_SNS), dans lequel ledit circuit de routage (CT_RTG) comprend des moyens de commutation (SW_SNS) configurés pour coupler matériellement ledit au moins un troisième périphérique (PER_SNS) avec ledit au moins un premier contrôleur (CTRL_S) lorsque le premier niveau de droit d'accès est attribué au troisième périphérique (PER_SNS), et pour coupler matériellement ledit au moins un troisième périphérique (PER_SNS) avec ledit au moins un deuxième contrôleur (CTRL_NS) lorsque le deuxième niveau de droit d'accès est attribué au troisième périphérique (PER_SNS).

2. Système sur puce selon la revendication 1 , dans lequel lesdits périphériques (PER_S, PER_NS, PER_SNS) sont configurés pour générer des requêtes ayant le niveau de droit d'accès identique au niveau de droit d'accès du périphérique respectif (PER_S, PER_NS, PER_SNS), ledit au moins un premier contrôleur d'accès direct en mémoire (CTRL_S) est configuré pour générer un accès direct en mémoire, en réponse à une requête ayant le premier niveau de droit d'accès, comprenant un transfert d'une salve de données entre le périphérique (PER_S, PER_SNS) qui a généré la requête et la première région mémoire (MEM_S) ou la deuxième région mémoire (MEM_NS), et ledit au moins un deuxième contrôleur d'accès direct en mémoire (CTRL_NS) est configuré pour générer un accès direct en mémoire, en réponse à une requête ayant le deuxième niveau de droit d'accès, comprenant un transfert d'une salve de données entre le périphérique qui a généré la requête (PER_NS, PER_SNS) et la deuxième région mémoire (MEM_NS).

3. Système sur puce selon l'une des revendications 1 ou 2, dans lequel le circuit de routage (CT_RTG) est adapté pour coupler dynamiquement un nombre N desdits périphériques (PER_S, PER_SNS) ayant le premier niveau de droit d'accès audit au moins un premier contrôleur d'accès direct en mémoire (CTRL_S) et pour coupler dynamiquement un nombre M desdits périphériques (PER_NS, PER_SNS) ayant le deuxième niveau de droit d'accès audit au moins un deuxième contrôleur d'accès direct en mémoire (CTRL_NS).

4. Système sur puce selon l'une des revendications précédentes, dans lequel le premier niveau de droit d'accès est un niveau de droit d'accès sécurisé correspondant à des fonctions sécurisées et le deuxième niveau de droit d'accès est un niveau de droit d'accès non-sécurisé correspondant à des fonctions non-sécurisées, le système sur puce comportant des moyens matériels de séparation physique (SEC) entre les éléments ayant le niveau de droit d'accès sécurisé et les éléments ayant le niveau de droit d'accès non-sécurisé.

5. Système sur puce selon l'une des revendications précédentes, comprenant en outre un processeur (PROC) capable de définir le niveau de droit d'accès dudit au moins un troisième périphérique (PER_SNS), et un bus (BS) configuré pour acheminer des signaux de communication entre le processeur (PROC), lesdits périphériques (PER_S, PER_SNS, PER_NS) et le circuit de mémoire (CT_MEM).

6. Procédé d'accès direct en mémoire à une première région mémoire (MEM_S) accessible avec un premier niveau de droit d'accès et à une deuxième région mémoire (MEM_NS) accessible avec le premier niveau de droit d'accès ou un deuxième niveau de droit d'accès, par au moins un premier périphérique (PER_S) ayant le premier niveau de droit d'accès et par au moins un deuxième périphérique (PER_NS) ayant le deuxième niveau de droit d'accès, lesdits accès directs en mémoire (DMA_S) par ledit au moins un premier périphérique (PER_S) étant générés par au moins un premier contrôleur d'accès direct en mémoire (CTRL_S) ayant le premier niveau de droit d'accès d'un circuit d'accès direct en mémoire (CT_DMA), et lesdits accès directs en mémoire (DMA_NS) par ledit au moins un deuxième périphérique (PER_NS) étant générés par au moins un deuxième contrôleur d'accès direct en mémoire (CTRL_NS) ayant le deuxième niveau de droit d'accès,
comprenant un accès direct en mémoire (DMA_S, DMA_NS) à la première région mémoire (MEM_S) et à la deuxième région mémoire (MEM_NS) par au moins un troisième périphérique (PER_SNS) apte à avoir un niveau de droit d'accès dynamiquement attribué entre le premier niveau de droit d'accès et le deuxième niveau de droit d'accès, l'accès direct en mémoire par ledit au moins un troisième périphérique (PER_SNS) étant généré par ledit au moins un premier contrôleur d'accès direct en mémoire (CTRL_NS) lorsque le premier niveau de droit d'accès est attribué au troisième périphérique (PER_SNS) et par ledit au moins un deuxième contrôleur d'accès direct en mémoire (CTRL_NS) lorsque le deuxième niveau de droit d'accès est attribué au troisième périphérique (PER_SNS).

7. Procédé selon la revendication 6, dans lequel des requêtes sont générées par les périphériques (PER_S, PER_SNS, PER_NS), les requêtes ayant le niveau de droit d'accès identique au niveau de droit d'accès du périphérique respectif, et les accès directs en mémoire (DMA_S) générés par ledit au moins un premier contrôleur (CTRL_S), en réponse à une requête ayant le premier niveau de droit d'accès, comprennent un transfert d'une salve de données entre le périphérique (PER_S, PER_SNS) qui a généré la requête et la première région mémoire (MEM_S) ou la deuxième région mémoire (MEM_NS) , et, les accès directs en mémoire (DMA_NS) générés par ledit au moins un deuxième contrôleur (CTRL_NS) en réponse à une requête ayant le deuxième niveau de droit d'accès comprennent un transfert d'une salve de données entre le périphérique (PER_NS, PER_SNS) qui a généré la requête et la deuxième région mémoire (MEM_NS).

8. Procédé selon l'une des revendications 6 ou 7, comprenant un couplage dynamique d'un nombre N desdits périphériques (PER_S, PER_SNS) ayant le premier niveau de droit d'accès audit au moins un premier contrôleur d'accès direct en mémoire (CTRL_S) et un couplage dynamique d'un nombre M desdits périphériques (PER_NS, PER_SNS) ayant le deuxième niveau de droit d'accès audit au moins un deuxième contrôleur d'accès direct en mémoire (CTRL_NS).

9. Procédé selon l'une des revendications 6 à 8, dans lequel le premier niveau de droit d'accès est un niveau de droit d'accès sécurisé correspondant à des fonctions sécurisées et le deuxième niveau de droit d'accès est un niveau de droit d'accès non-sécurisé correspondant à des fonctions non-sécurisées, les éléments ayant le niveau de droit d'accès sécurisé (PER_S, MEM_S) et les éléments ayant le niveau de droit d'accès non-sécurisé (PER_NS, MEM_NS) étant séparés physiquement par des moyens matériels de séparation physique (SEC).

10. Procédé selon l'une des revendications 6 à 9, comprenant un acheminement de signaux de communication par un bus (BS) entre lesdits périphériques (PER_S, PER_SNS, PER_NS), le circuit de mémoire (CT_MEM) et un processeur (PROC) capable de définir le niveau de droit d'accès dudit au moins un troisième périphérique (PER_SNS).

## Patentansprüche

1. Chipsystem (SYS), das einen Speicherkreis (CT_MEM) umfasst, der eine erste Speicherregion (MEM_S) aufweist, die mit einer ersten Zugriffsberechtigungsebene zugänglich ist und eine zweite Speicherregion (MEM_NS), die mit der ersten Zugriffsberechtigungsebene oder einer zweiten Zugriffsberechtigungsebene zugänglich ist, mindestens ein erstes Peripheriegerät (PER_S) mit der ersten Zugriffsberechtigungsebene, mindestens ein zweites Peripheriegerät (PER_NS) mit der zweiten Zugriffsberechtigungsebene, und einen direkten Speicherzugriffskreis (CT_DMA), der zum Erzeugen von direkten Speicherzugriffen (DMA_S, DMA_NS) geeignet ist, wobei der direkte Speicherzugriffskreis (CT_DMA) mindestens eine erste direkte Speicherzugriffssteuerung (CTRL_S) mit der ersten Zugriffsberechtigungsebene und mindestens eine zweite direkte Speicherzugriffssteuerung (CTRL_NS) mit der zweiten Zugriffsberechtigungsebene umfasst, wobei das Chipsystem (SYS) eine Routingschaltung (CT_RTG) umfasst, die zum materiellen Koppeln des mindestens einen ersten Peripheriegerätes (PER_S) mit der mindestens ersten Steuerung (CTRL_S) und zum materiellen Koppeln des mindestens zweiten Peripheriegerätes (PER_NS) mit der mindestens zweiten Steuerung (CTRL_NS), eingerichtet ist,
umfassend ferner mindestens ein drittes Peripheriegerät (PER_SNS), das geeignet ist, eine zwischen der ersten und der zweiten Zugriffsberechtigungsebene dynamisch zugewiesene Zugriffsberechtigungsebene zu haben, und ein Mittel zur Verwaltung der Zugriffsberechtigungsebene (CT_SNS), das so eingerichtet ist, um die Zugriffsberechtigungsebene dem mindestens einen dritten Peripheriegerät (PER_SNS) zuzuweisen, wobei die Routingschaltung (CT_RTG) Umschaltmittel (SW_SNS) umfasst, die zum materiellen Koppeln des mindestens dritten Peripheriegeräts (PER_SNS) mit der mindestens ersten Steuerung (CTRL_S) eingerichtet sind, wenn dem dritten Peripheriegerät (PER_SNS) die erste Zugriffsberechtigungsebene zugewiesen ist, und zum materiellen Koppeln des mindestens dritten Peripheriegerätes (PER_SNS) mit der mindestens zweiten Steuerung (CTRL_NS), wenn dem dritten Peripheriegerät (PER_SNS) die zweite Zugriffsberechtigungsebene zugewiesen ist.

2. Chipsystem nach Anspruch **1,** wobei die Peripheriegeräte (PER_S, PER_NS, PER_SNS) eingerichtet sind, dass sie Anfragen mit der gleichen Zugriffsberechtigungsebene wie die Zugriffsberechtigungsebene des jeweiligen Peripheriegerätes (PER_S, PER_NS, PER_SNS) erzeugen, wobei die mindestens eine erste direkte Speicherzugriffssteuerung (CTRL_S) eingerichtet ist, um als Reaktion auf eine Anfrage mit der ersten Zugriffsberechtigungsebene einen direkten Speicherzugriff zu erzeugen, umfassend eine Übertragung eines Datensatzes zwischen dem Peripheriegerät (PER_S, PER_SNS), das die Anfrage erzeugt hat und der ersten Speicherregion (MEM_S) oder der zweiten Speicherregion (MEM_NS), und der mindestens einen zweiten direkten Speicherzugriffssteuerung (CTRL_NS) eingerichtet ist, um als Reaktion auf eine Anfrage mit der zweiten Zugriffsberechtigungsebene einen direkten Speicherzugriff zu erzeugen, umfassend eine Übertragung eines Datensatzes zwischen dem Peripheriegerät, das die Anfrage erzeugt hat (PER_NS, PER_SNS) und der zweiten Speicherregion (MEM_NS).

3. Chipsystem nach einem der Ansprüche 1 oder **2,** wobei die Routingschaltung (CT_RTG) angepasst ist, um eine Anzahl N der Peripheriegeräte (PER_S, PER_SNS) mit der ersten Zugriffsberechtigungsebene mit der mindestens einen ersten direkten Speicherzugriffssteuerung (CTRL_S) dynamisch zu koppeln und, um eine Anzahl M der Peripheriegeräte (PER_NS, PER_SNS) mit der zweiten Zugriffsberechtigungsebene mit der mindestens zweiten Speicherzugriffssteuerung (CTRL_NS) dynamisch zu koppeln.

4. Chipsystem nach einem der vorhergehenden Ansprüche, bei dem die erste Zugriffsberechtigungsebene eine gesicherte Zugriffsberechtigungsebene ist, die gesicherten Funktionen entspricht, und die zweite Zugriffsberechtigungsebene eine nicht gesicherte Zugriffsberechtigungsebene ist, die nicht gesicherten Funktionen entspricht, wobei das Chipsystem materielle Mittel zur physischen Trennung (SEC) zwischen den Elementen mit der gesicherten Zugriffsberechtigungsebene und den Elementen mit der nicht gesicherten Zugriffsberechtigungsebene umfasst.

5. Chipsystem nach einem der vorhergehenden Ansprüche, ferner umfassend einen Prozessor (PROC), der imstande ist, die Zugriffsberechtigungsebene des mindestens einen dritten Peripheriegeräts (PER_SNS) zu definieren, und einen Bus (BS), der eingerichtet ist, um Kommunikationssignale zwischen dem Prozessor (PROC), den Peripheriegeräten (PER_S, PER_SNS, PER_NS) und dem Speicherkreis (CT_MEM) weiterzuleiten.

6. Verfahren zum direkten Speicherzugriff auf eine erste Speicherregion (MEM_S), auf die mit einer ersten Zugriffsberechtigungsebene zugegriffen wird, und auf eine zweite Speicherregion (MEM_NS), auf die mit der ersten Zugriffsberechtigungsebene oder einer zweiten Zugriffsberechtigungsebene zugegriffen wird, durch mindestens ein erstes Peripheriegerät (PER_S), das die erste Zugriffsberechtigungsebene hat, und durch mindestens ein zweites Peripheriegerät (PER_NS), das die zweite Zugriffsberechtigungsebene hat, wobei die direkten Speicherzugriffe (DMA_S) durch das mindestens eine erste Peripheriegerät (PER_S) durch mindestens eine erste direkte Speicherzugriffssteuerung (CTRL_S) mit der ersten Zugriffsrechtsebene eines direkten Speicherzugriffskreises (CT_DMA) erzeugt werden, und wobei die direkten Speicherzugriffe (DMA_NS) durch das mindestens eine zweite Peripheriegerät (PER_NS) durch mindestens eine zweite direkte Speicherzugriffssteuerung (CTRL_NS) mit der zweiten Zugriffsberechtigungsebene erzeugt werden,
umfassend einen direkten Speicherzugriff (DMA_S, DMA_NS) auf die erste Speicherregion (MEM_S) und die zweite Speicherregion (MEM_NS) durch mindestens ein drittes Peripheriegerät (PER_SNS), das imstande ist, eine dynamisch zugewiesene Zugriffsberechtigungsebene zwischen der ersten Zugriffsberechtigungsebene und der zweiten Zugriffsberechtigungsebene zu haben, wobei der direkte Speicherzugriff durch das mindestens eine dritte Peripheriegerät (PER_SNS) von dem mindestens einen ersten Controller für direkten Speicherzugriff (CTRL_NS) erzeugt wird, wenn die erste Zugriffsrechtsebene dem dritten Peripheriegerät (PER_SNS) zugewiesen wird, und von dem mindestens einen zweiten Controller für direkten Speicherzugriff (CTRL_NS) erzeugt wird, wenn die zweite Zugriffsrechtsebene dem dritten Peripheriegerät (PER_SNS) zugewiesen wird.

7. Verfahren nach Anspruch **6,** bei dem Anfragen von den Peripheriegeräten (PER_S, PER_SNS, PER_NS) erzeugt werden, wobei die Anfragen die gleiche Zugriffsberechtigungsebene wie die Zugriffsberechtigungsebene des jeweiligen Peripheriegeräts haben, und die direkten Speicherzugriffe (DMA_S), die von der mindestens einen ersten Steuerung (CTRL_S) als Reaktion auf eine Anfrage mit der ersten Zugriffsberechtigungsebene erzeugt werden, eine Übertragung eines Datensatzes zwischen dem Peripheriegerät (PER_S, PER_SNS), das die Anfrage erzeugt hat, und der ersten Speicherregion (MEM_S) oder der zweiten Speicherregion (MEM_NS), und, die direkten Speicherzugriffe (DMA_NS), die von der mindestens einen zweiten Steuerung (CTRL_NS) als Reaktion auf eine Anfrage mit der zweiten Zugriffsberechtigungsebene erzeugt werden, eine Übertragung eines Datensatzes zwischen dem Peripheriegerät (PER_S, PER_SNS, PER_NS), das die Anfrage erzeugt hat, und der zweiten Speicherregion (MEM_NS) umfassen.

8. Verfahren nach einem der Ansprüche 6 oder **7,** das eine dynamische Kopplung einer Anzahl N der Peripheriegeräte (PER_S, PER_SNS) mit der ersten Zugriffsberechtigungsebene mit der mindestens einen ersten direkten Speicherzugriffssteuerung (CTRL_S) und eine dynamische Kopplung einer Anzahl M der Peripheriegeräte (PER_NS, PER_SNS) mit der zweiten Zugriffsberechtigungsebene mit der mindestens einen zweiten direkten Speicherzugriffssteuerung (CTRL_NS) umfasst.

9. Verfahren nach einem der Ansprüche 6 bis 8, bei dem die erste Zugriffsberechtigungsebene eine gesicherte Zugriffsberechtigungsebene ist, die gesicherten Funktionen entspricht, und die zweite Zugriffsberechtigungsebene eine ungesicherte Zugriffsberechtigungsebene ist, die ungesicherten Funktionen entspricht, wobei die Elemente mit der gesicherten Zugriffsberechtigungsebene (PER_S, MEM_S) und die Elemente mit der ungesicherten Zugriffsberechtigungsebene (PER_NS, MEM_NS) durch materielle Mittel zur physischen Trennung (SEC) physisch voneinander getrennt sind.

10. Verfahren nach einem der Ansprüche 6 bis 9, umfassend ein Weiterleiten von Kommunikationssignalen über einen Bus (BS) zwischen den Peripheriegeräten (PER_S, PER_SNS, PER_NS), dem Speicherkreis (CT_MEM) und einem Prozessor (PROC), der imstande ist, die Zugriffsberechtigungsebene des mindestens einen dritten Peripheriegeräts (PER_SNS) zu definieren.

## Claims

1. System-on-chip (SYS) including a memory circuit (CT_MEM) comprising a first memory region (MEM_S) accessible with a first level of access rights and a second memory region (MEM_NS) accessible with the first level of access rights or a second level of access rights, at least one first peripheral device (PER_S) having the first level of access rights, at least one second peripheral device (PER_NS) having the second level of access rights, and a direct memory access circuit (CT_DMA) capable of generating direct memory accesses (DMA_S, DMA_NS), wherein the direct memory access circuit (CT_DMA) includes at least one first direct memory access controller (CTRL_S) having the first level of access rights and at least one second direct memory access controller (CTRL_NS) having the second level of access rights, the system-on-chip (SYS) including a routing circuit (CT_RTG) configured to physically couple said at least one first peripheral device (PER_S) with said at least one first controller (CTRL_S) and to physically couple said at least one second device (PER_NS) with said at least one second controller (CTRL_NS),
further comprising at least one third peripheral device (PER_SNS) capable of having a level of access rights that is dynamically assigned between the first level of access rights and the second level of access rights, and a level of access rights management system (CT_SNS) configured to assign the level of access rights to at least one third peripheral device (PER_SNS), wherein said routing circuit (CT_RTG) comprises switching means (SW_SNS) configured to physically couple said at least one third peripheral device (PER_SNS) with said at least one first controller (CTRL_S) when the first level of access rights is assigned to the third peripheral device (PER_SNS), and to physically couple said at least one third peripheral device (PER_SNS) with said at least one second controller (CTRL_NS) when the second level of access rights is assigned to the third peripheral device (PER_SNS).

2. System-on-chip according to claim 1, wherein said peripheral devices (PER_S, PER_NS, PER_SNS) are configured to generate requests that have level of access rights that are identical to the level of access rights of the respective peripheral device (PER_S, PER_NS, PER_SNS), said at least one first direct memory access controller (CTRL_S) is configured to generate direct memory access, in response to a request that has the first level of access rights, comprising a transfer of a data burst between the peripheral device (PER_S, PER_SNS) that has generated the request and the first memory region (MEM_S) or the second memory region (MEM_NS), and said at least one second direct memory access controller (CTRL_NS) is configured to generate direct memory access, in response to a request that has the second level of access rights, comprising a transfer of a data burst between the peripheral device that has generated the request (PER_NS, PER_SNS) and the second memory region (MEM_NS).

3. System-on-chip according to any one of claims 1 or **2,** wherein the routing circuit (CT_RTG) is adapted to dynamically couple a number N of said peripheral devices (PER_S, PER_SNS) that have the first level of access rights to said at least one first direct memory access controller (CTRL_S) and to dynamically couple a number M of said peripheral devices (PER_NS, PER_SNS) that have the second level of access rights to said at least one second direct memory access controller (CTRL_NS).

4. System-on-chip according to any one of the preceding claims, wherein the first level of access rights is a secure level of access rights corresponding to secure functions and the second level of access rights is a non-secure level of access rights corresponding to non-secure functions, the system-on-chip including physical separation means (SEC) between elements that have the secure level of access rights and elements that have the non-secure level of access rights.

5. System-on-chip according to any one of the preceding claims, further comprising a processor (PROC) capable of defining the level of access rights of said at least one third peripheral device (PER_SNS), and a bus (BS) configured to route communication signals between the processor (PROC), said peripheral devices (PER_S, PER_SNS, PER_NS) and the memory circuit (CT_MEM).

6. Method for direct memory access to a first memory region (MEM_S) accessible with a first level of access rights and to a second memory region (MEM_NS) accessible with the first level of access rights or a second level of access rights via at least one first peripheral device (PER_S) that has the first level of access rights and via at least one second peripheral device (PER_NS) that has the second level of access rights, said direct memory accesses (DMA_S) via said at least one first peripheral device (PER_S) being generated by at least one first direct memory access controller (CTRL_S) that has the first level of access rights of a direct memory access circuit (CT_DMA), and said direct memory accesses (DMA_NS) via said at least one second peripheral device (PER_NS) being generated by at least one second direct memory access controller (CTRL_NS) that has the second level of access rights,
comprising a direct memory access (DMA_S, DMA_NS) to the first memory region (MEM_S) and to the second memory region (MEM_NS) via at least one third peripheral device (PER_SNS) capable of having a level of access rights which is dynamically assigned between the first level of access rights and the second level of access rights, the direct memory access via said at least one third device (PER_SNS) being generated by said at least one first direct memory access controller (CTRL_NS) when the first level of access rights is assigned to the third peripheral device (PER_SNS) and via said at least one second direct memory access controller (CTRL_NS) when the second level of access rights is assigned to the third peripheral device (PER_SNS).

7. Method according to claim **6,** wherein requests are generated by the peripheral devices (PER_S, PER_SNS, PER_NS), the requests having the level of access rights that is identical to the level of access rights of the respective peripheral device, and direct memory accesses (DMA_S) generated by said at least one first controller (CTRL_S), in response to a request that has the first level of access rights, comprise a transfer of a data burst between the peripheral device (PER_S, PER_SNS) which has generated the request and the first memory region (MEM_S) or the second memory region (MEM_NS), and, direct memory accesses (DMA_NS) generated by said at least one second controller (CTRL_NS), in response to a request that has the second level of access rights, comprise a transfer of a data burst between the peripheral device (PER_NS, PER_SNS) which has generated the request and the second memory region (MEM_NS).

8. Method according to any one of claims 6 or **7,** comprising dynamic coupling of a number N of said peripheral devices (PER_S, PER_SNS) that have the first level of access right with at least one first direct memory access controller (CTRL_S) and a dynamic coupling of a number M of said peripheral devices (PER_NS, PER_SNS) that have the second level of access rights with at least one second direct memory access controller (CTRL_NS).

9. Method according to any one of claims 6 to **8,** wherein the first level of access rights is a secure level of access rights corresponding to secure functions and the second level of access rights is a non-secure level of access rights corresponding to non-secure functions, the elements having the secure level of access rights (PER_S, MEM_S) and the elements having the non-secure level of access rights (PER_NS, MEM_NS) being physically separated by physical separation means (SEC).

10. Method according to any one of claims 6 to **9,** comprising routing communication signals via a bus (BS) between said peripheral devices (PER_S, PER_SNS, PER_NS), the memory circuit (CT_MEM) and a processor (PROC) capable of defining the level of access rights of said at least one third peripheral device (PER_SNS).
